# EUROPÄISCHE PATENTSCHRIFT

(11) **EP 2 101 019 B1**
(45) Veröffentlichungstag und Bekanntmachung des Hinweises auf die Patenterteilung: **27.03.2013**
(21) Anmeldenummer: 09152767.1
(22) Anmeldetag: 13.02.2009
(51) Int. Cl.: E05C 9/00, E05C 9/20, H02B 1/38

(54) **Riegelstangenanordnung für ein Fenster oder eine Tür, Fenster oder Tür mit wenigstens einer Riegelstangenanordnung, Schaltschrank mit einem Fenster oder einer Tür sowie ein Verfahren zum Befestigen einer Riegelstangenanordnung an einem Fenster oder einer Tür**
Lock bar assembly for a window or door, window or door with at least one lock bar assembly, switching cabinet with a window or door and method for attaching a lock bar assembly to a window or door
Agencement de tige de verrouillage pour une fenêtre ou une porte, fenêtre ou porte dotée d'au moins un agencement de tige de verrouillage, armoire électrique dotée d'une fenêtre ou d'une porte et procédé de fixation d'un agencement de tige de verrouillage sur une fenêtre ou une porte

(30) Priorität: 13.03.2008 DE 102008014124
(43) Veröffentlichungstag der Anmeldung: 16.09.2009
(73) Patentinhaber: Siemens Aktiengesellschaft, 80333 München (DE)
(72) Erfinder: Wilhelm, Horst, 93073 Neutraubling (DE)

(56) Entgegenhaltungen:
- JP-A- 2000 073 640
- JP-A- 2003 193 728
- JP-A- 2007 327 243
- JP-U- 52 092 998

## Beschreibung

Riegelstangenanordnung für ein Fenster oder eine Tür, Fenster oder Tür mit wenigstens einer Riegelstangenanordnung, Schaltschrank mit einem Fenster oder einer Tür sowie ein Verfahren zum Befestigen einer Riegelstangenanordnung an einem Fenster oder einer Tür

Die vorliegende Erfindung betrifft eine Riegelstangenanordnung für ein Fenster oder eine Tür zum Verschließen des Fensters bzw. der Tür, aufweisend eine Riegelstange und wenigstens zwei an einem Rahmenelement des Fensters oder der Tür befestigbare Riegelstangenführungen, die zum beweglichen Führen der Riegelstange ausgebildet sind. Ferner betrifft die Erfindung ein Fenster oder eine Tür, aufweisend wenigstens eine Riegelstangenanordnung, einen Schaltschrank mit wenigstens einem Fenster oder wenigstens einer Tür sowie ein Verfahren zum Befestigen einer Riegelstangenanordnung an einem Rahmenelement eines Fensters oder einer Tür.

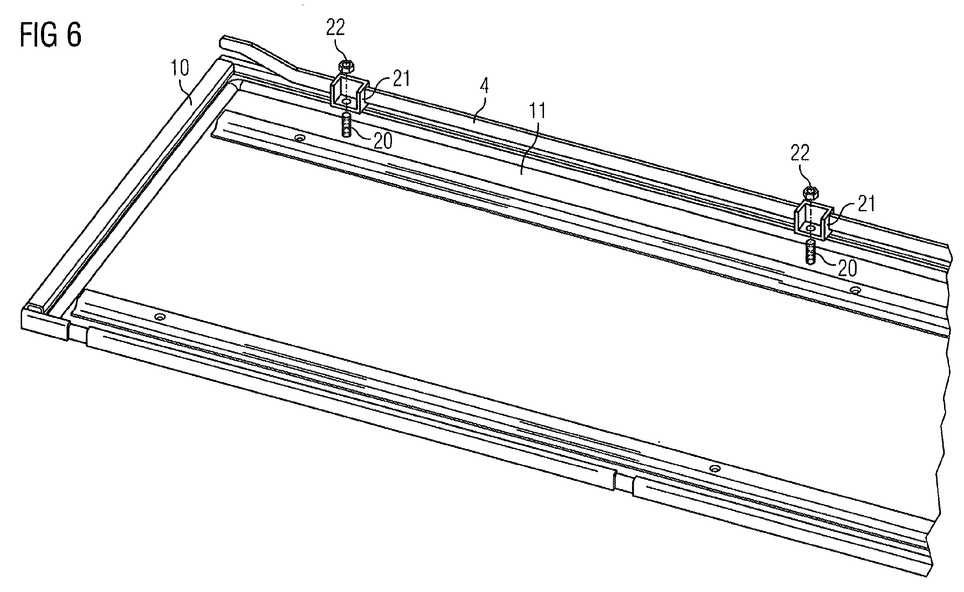

Riegelstangenanordnungen mit Riegelstangenführungen zur Führung einer Riegelstange, die zum Verschließen von Fenstern und Türen, insbesondere von Schaltschränken, dient, sind bekannt. So ist zum Beispiel bekannt, dass Gewindebolzen 20 in ein Rahmenelement 11 einer Tür 10 eines Schaltschrankes angeschweißt werden. Über diese angeschweißten Gewindebolzen 20 wird jeweils ein aufklappbares Kunststoffteil 21, welches als Riegelstangenführung dient, angeordnet. D.h. die aufklappbaren Kunststoffteile 21 weisen Durchführungen für die Gewindebolzen 20 und Aufnahmen für die Riegelstange 4 auf. Die Aufnahmen werden durch Klappen gebildet. In die Aufnahmen der aufklappbaren Kunststoffteile 21 wird die Riegelstange 4 eingelegt und die Klappen geschlossen, so dass die Riegelstange 4 in den Aufnahmen führbar gehalten ist. Die aufklappbaren Kunststoffteile 21 werden nach Durchführung der Gewindebolzen 20 mit einer Schraubenmutter 22 an dem Gewindebolzen 20 angeschraubt bzw. befestigt, siehe Fig. 6.

Die JP 52 092998 U beschreibt eine Verriegelungsvorrichtung mit einer Riegelstange und Riegelstangenführungen.

Von der JP 2007 327243 A wird eine Verriegelungsvorrichtung offenbart zum Verriegeln einer Tür. Die Verriegelungsvorrichtung umfasst eine Verriegelungsstange mit Führungen und einen Riegel.

Die JP 2003 193728 A zeigt eine Verriegelungsvorrichtung für eine Tür, die einen Hebel zum Verriegeln umfasst.

Nachteilig hierbei ist, dass die Montage der Riegelstangenanordnung, d.h. der Gewindebolzen, der aufklappbaren Kunststoffteile sowie der Riegelstange an dem Rahmenelement der Tür zu lange dauert. Gerade im Bereich der Montage von Schaltschränken ist eine zeiteffiziente Montage wünschenswert. Ferner entstehen Kosten für die Gewindebolzen und insbesondere für die relativ aufwendigen aufklappbaren Kunststoffteile.

Die Aufgabe der Erfindung besteht darin, eine Riegelstangenanordnung für ein Fenster oder eine Tür, ein Fenster oder eine Tür, aufweisend wenigstens eine Riegelstangenanordnung, sowie einen Schaltschrank mit einem Fenster oder einer Tür zu schaffen, die eine einfache, schnelle und kostengünstige Montage der Riegelstangenanordnung an dem Fenster oder der Tür ermöglicht. Ferner soll ein Verfahren zum Befestigen einer Riegelstangenanordnung an einem Rahmenelement eines Fensters oder einer Tür werden, das eine einfache, schnelle und kostengünstige Montage ermöglicht.

Diese Aufgaben werden erfindungsgemäß durch eine Riegelstangenanordnung mit den Merkmalen gemäß dem unabhängigen Patentanspruch 1, durch ein Fenster oder eine Tür mit den Merkmalen gemäß dem unabhängigen Patentanspruch 6, durch ein Schaltschrank mit den Merkmalen gemäß dem unabhängigen Patentanspruch 11 sowie durch eine Verfahren zum Befestigen einer Riegelstangenanordnung mit den Merkmalen gemäß dem unabhängigen Patentanspruch 12 gelöst. Weitere Merkmale und Details der Erfindung ergeben sich aus den Unteransprüchen, der Beschreibung sowie den Zeichnungen. Merkmale und Details die im Zusammenhang mit der Riegelstangenanordnung beschrieben sind gelten dabei selbstverständlich auch im Zusammenhang mit dem Fenster oder der Tür, dem Schaltschrank und dem Verfahren zum Befestigen einer Riegelstangenanordnung und jeweils umgekehrt.

Gemäß dem ersten Aspekt der Erfindung wird die Aufgabe wird durch eine Riegelstangenanordnung für ein Fenster oder eine Tür zum Verschließen des Fensters bzw. der Tür, aufweisend eine Riegelstange und wenigstens zwei an einem Rahmenelement des Fensters oder der Tür befestigbare Riegelstangenführungen, die zum beweglichen Führen der Riegelstange ausgebildet sind, bei der die wenigstens zwei Riegelstangenführungen als Winkelprofile ausgebildet sind, wobei ein erster Schenkel eines jeden Winkelprofils an dem Rahmenelement des Fensters oder der Tür befestigbar ist und der zweite Schenkel eines jeden Winkelprofils eine Aussparung zur Aufnahme und Führung der Riegelstange aufweist, gelöst.

Kern der Erfindung ist zum einen die Materialeinsparung der Riegelstangenanordnung und zum anderen die damit verbundene Reduzierung der Montagezeit der Riegelstangenanordnung an einem Fenster oder einer Tür bzw. an einem Rahmenelement eines Fensters oder einer Tür. Die Riegelstangenanordnung dient zum Verschließen des Fensters bzw. der Tür. Insbesondere die Tür eines Schaltschrankes kann durch eine derartige Riegelstangenanordnung einfach und sicher verschlossen werden. Die Riegelstangenanordnung weist eine Riegelstange und wenigstens zwei an einem Rahmenelement des Fensters oder der Tür befestigbare Riegelstangenführungen auf. Die Riegelstangenführungen sind dabei zum beweglichen Führen der Riegelstange ausgebildet. D.h., die Riegelstange wird durch ein mit der Riegelstange in Wirkverbindung stehendes Schloss bewegt, so dass das Fenster oder die Tür durch die Verschiebung der Riegelstange an einer entsprechenden Hinterschneidung, beispielsweise einer Seitenwand eines Schaltschrankes, verriegelt werden kann.

Die wenigstens zwei Riegelstangenführungen sind dabei als Winkelprofile ausgebildet. Ein erster Schenkel eines jeden Winkelprofils ist an dem Fenster oder der Tür bzw. an dem Rahmenelement des Fensters oder der Tür befestigbar. Bevorzugt werden die ersten Schenkel an dem Rahmenelement des Fensters oder der Tür angeschweißt. Der zweite Schenkel eines jeden Winkelprofils weist eine Aussparung zur Führung der Riegelstange auf. Die Riegelstange wird in die Aussparungen der zweiten Schenkel der wenigstens zwei Winkelprofile eingeführt. Die Winkelprofile werden dabei so an dem Rahmenelement des Fensters oder der Tür befestigt, dass die Aussparungen der zweiten Schenkel der Winkelprofile fluchtend zueinander angeordnet sind. Die Riegelstange kann durch die Aussparungen eingeschoben werden. Die Aussparungen sind bevorzugt rechteckig ausgebildet, können aber auch andere Formen, wie oval, rund oder mehreckig, aufweisen. Die Riegelstange liegt annähernd formschlüssig in den Aussparungen ein, so dass sie entlang der Längsachse der Aussparungen verschoben werden kann.

Vorteilhaft bei einer derartigen Riegelstangenanordnung ist die einfache und schnelle Montage der Riegelstangenführungen, d.h. der Winkelprofile, an dem Fenster oder der Tür bzw. dem Rahmenelement des Fensters oder der Tür sowie die einfache Befestigung der Riegelstange an den Aussparungen der Winkelprofile. Ferner ist die Riegelstangenanordnung kostengünstig, da neben der Riegelstange nur zumindest zwei Winkelprofile benötigt werden. Da die Winkelprofile direkt an dem Fenster oder der Tür bzw. dem Rahmenelement des Fensters oder der Tür befestigt werden, sind keine zusätzlichen Gewindebolzen oder andere Aufnahmeelemente für die separaten Riegelstangenführungen erforderlich. Die Einsparung der Kunststoffteile, d.h. der aufklappbaren Kunststoffteile, ermöglicht Materialkosteneinsparungen sowie Montagekosteneinsparungen. Die Winkelprofile ersetzen die Gewindebolzen, wie aus dem Stand der Technik bekannt.

Die beiden Schenkel eines Winkelprofils können verschiedenartig zueinander geneigt ausgebildet sein. Bevorzugt sind die beiden Schenkel, d.h. der erste und der zweite Schenkel, eines jeden Winkelprofils jedoch rechtwinkelig zueinander angeordnet. Dies ermöglicht zum einen eine einfache Herstellung der Winkelprofile, als auch eine einfache Befestigung der Winkelprofile an dem Fenster oder der Tür sowie eine einfache Einfügung der Riegelstange durch die Aussparungen der Winkelelemente.

Erfindungsgemäß ist eine Riegelstangenanordnung, bei der der zweite Schenkel jedes Winkelprofils seitlich eine Öffnung zur Hindurchführung der Riegelstange in die Aussparungen aufweist und dass die Riegelstange wenigstens zwei Schlitze in ihrer Längsseite zur Hindurchführung der Riegelstange durch die Öffnungen in die zweiten Schenkel der Winkelprofile aufweist.

Dadurch, dass jeder zweite Schenkel seitlich eine Öffnung, die bis zur jeweiligen Aussparung reicht, aufweist, kann die Riegelstange sehr einfach durch die Öffnungen eingefädelt werden. Damit die Einfädelung einfach möglich ist, weist die Riegelstange entsprechende Schlitze in ihrer Längsseite auf. Die Öffnungen in den Seiten der zweiten Schenkel der Winkelprofile sind kleiner als die Aussparungen. Deshalb wird eine eingeführte Riegelstange sicher in den Aussparungen geführt, ohne dass diese wieder aus den Winkelprofilen wieder herausfällt. Durch die Schlitze ist die Riegelstange an zumindest zwei Stellen kleiner in Ihren Ausmaßen, so dass diese an den Stellen, wo die Schlitze sind, durch die Öffnungen eingefädelt werden können. Danach wird die Riegelstange axial verschoben, so dass sie sicher in den Aussparungen geführt ist.

Die Riegelstange der Riegelstangenanordnung kann ebenfalls unterschiedliche Profile bzw. Querschnitte aufweisen. Das Profil bzw. der Querschnitt der Riegelstange ist bevorzugt ein rechteckiges Profil bzw. ein rechteckiger Querschnitt. D.h., die Riegelstange weist vorteilhafterweise ein längliches rechteckiges Profil auf. Entscheidend ist, dass die Form der Riegelstange mit der Form der Aussparung der zweiten Schenkel der Winkelprofile korrespondiert, damit diese in den Winkelprofilen führbar gehalten ist. In einer anderen Ausführungsform der Riegelstange kann diese auch ein dreieckiges oder ein rundes Profil bzw. einen dreieckigen oder einen runden Querschnitt aufweisen.

Des Weiteren ist eine Riegelstangenanordnung bevorzugt, bei der die Riegelstangenführungen aus einem schweißbaren Material ausgebildet sind. Zumindest die ersten Schenkel der Winkelprofile sollten aus einem schweißbaren Material ausgebildet sein. Da die Winkelprofile aber in der Regel einstückig ausgebildet sind, sind die kompletten Winkelprofile bevorzugt als eine schweißbaren Material ausgebildet. Hierdurch können die Winkelprofile mittels ihrer ersten Schenkel an dem Fenster oder der Tür bzw. dem Rahmenelement des Fensters oder der Tür angeschweißt werden. Die Schweißverbindung gewährleistet einen besonders sicheren Halt der Riegelstangenführungen und damit der Riegelstange an dem Fenster oder der Tür. Die Riegelstangenführungen, d.h. die ersten Schenkel der Winkelprofile können aber auch durch stark wirkende Kleber an dem Fenster oder der Tür bzw. dem Rahmenelement des Fensters oder der Tür befestigt werden. Hierbei könnten die Riegelstangenführungen, d.h. die Winkelprofile, aus einem sehr stabilen Kunststoff ausgebildet sein.

Die Riegelstange der Riegelstangenanordnung ist bevorzugt an einem Ende zweifach abgewinkelt. Dieses Ende der Riegelstange dient zum Hintergreifen eines Gegenstandes, damit das Fenster oder die Tür dort verriegelt werden können. So hintergreift dieses Ende der Riegelstange beispielsweise eine Seitenwand eines Schaltschrankes, so dass die Tür des Schaltschrankes geschlossen werden kann.
Dabei weist die Abwinkelung vorteilhafterweise eine z-förmige Form auf.

Die Aufgabe wird gemäß dem zweiten Aspekt der Erfindung durch ein Fenster oder Tür, aufweisend wenigstens eine Riegelstangenanordnung, wobei die Riegelstangenanordnung eine Riegelstange und wenigstens zwei an einem Rahmenelement des Fensters oder der Tür befestigbare Riegelstangenführungen, die zum beweglichen Führen der Riegelstange ausgebildet sind, aufweist, wobei die wenigstens zwei Riegelstangenführungen als Winkelprofile ausgebildet sind, und wobei ein Schenkel eines jeden Winkelprofils an dem Rahmenelement des Fensters oder der Tür befestigbar ist und der zweite Schenkel eines jeden Winkelprofils eine Aussparung zur Aufnahme und Führung der Riegelstange aufweist, gelöst.

Ein derartiges Fenster bzw. eine derartige Tür, mit zumindest einer Riegelstangenanordnung gemäß dem ersten Aspekt der Erfindung, kann einfach und schnell zusammengefügt werden. D.h., die Riegelstangenanordnung kann schnell und einfach an dem Fenster oder der Tür bzw. einem Rahmenelement des Fensters oder der Tür montiert werden. Das Fenster oder die Tür können kostengünstig erzeugt werden, da die Riegelstangenanordnung in der einfachsten Ausführungsform nur eine Riegelstange und zwei Riegelstangenführungen aufweist. Gesonderte Bolzen zur Befestigung der Riegelstangenführungen sind bei einem derartigen Fenster bzw. einer derartigen Tür nicht erforderlich.

Besonders bevorzugt sind daher ein Fenster bzw. eine Tür, die wenigstens eine Riegelstangenanordnung aufweisen, die gemäß dem ersten Aspekt der Erfindung ausgebildet ist.

Der erste Schenkel eines jeden Winkelprofils einer Riegelstangenführung ist vorteilhafterweise an einem Rahmenelement des Fensters bzw. der Tür verschweißt, wobei die Aussparungen der zweiten Schenkel der Winkelprofile fluchtend zueinander angeordnet sind. Sind mehr als zwei Winkelprofile vorgesehen sind die Aussparungen in den zweiten Schenkeln der Winkelprofile alle zueinander fluchtend angeordnet. D.h., die Riegelstangenführungen sind durch Schweißverbindungen direkt mit dem Fenster oder der Tür bzw. einem Rahmenelement des Fensters oder der Tür verbunden. Diese schafft einen besonders guten und einfachen Halt der Riegelstangenführung an dem Fenster oder der Tür. Es sind keine Zwischenelemente zur Befestigung der Riegelstangenführungen erforderlich, wodurch die Montagezeiten und damit die Montagekosten gering gehalten werden können.

Bevorzugt sind ferner ein Fenster oder eine Tür, bei denen die Riegelstange in der in die Aussparungen der zweiten Schenkel der Winkelprofile eingeführten Position in Wirkverbindungen zu einen Schloss des Fensters oder der Tür steht. Dass Schloss fixiert die Riegelstange innerhalb der Riegelstangenführungen. D.h., das Schloss ermöglicht eine axiale Bewegung bzw. Verschiebung der Riegelstange durch die Aussparungen der zweiten Schenkel der Winkelprofile. Dabei definiert das Schloss die möglichen Endpositionen der Riegelstange, d.h. die nicht-verriegelte Position und die verriegelte Position.

Des Weiteren ist bevorzugt, dass das Fenster oder die Tür zum Verschließen eines Schaltschrankes ausgebildet ist. D.h. durch ein derartiges Fenster oder eine derartige Tür kann ein Schaltschrank sehr einfach und schnell verschlossen bzw. wieder geöffnet werden.

Gemäß dem dritten Aspekt der Erfindung wird die Aufgabe durch einen Schaltschrank mit wenigstens einem Fenster oder wenigstens einer Tür, bei dem das wenigstens eine Fenster oder die wenigstens eine Tür gemäß dem zweiten Aspekt der Erfindung ausgebildet ist, gelöst. Ein Schaltschrank mit wenigstens einem Fenster oder wenigstens einer Tür, die eine Riegelstangenanordnung nach dem ersten Aspekt der Erfindung aufweist, kann besonders einfach, schnell und kostengünstig montiert werden.

Gemäß dem letzten Aspekt der Erfindung wird die Aufgabe durch ein Verfahren zum Befestigen einer Riegelstangenanordnung an einem Fenster oder einer Tür bzw. einem Rahmenelement eines Fensters oder einer Tür, wobei die Riegelstangenanordnung eine Riegelstange und zwei Riegelstangenführungen gemäß dem ersten Aspekt der Erfindung umfasst, bei dem die ersten Schenkel der als Winkelprofile ausgebildeten Riegelstangenführungen an einem Rahmenelement des Fensters oder der Tür befestigt, insbesondere angeschweißt, werden und bei dem die Riegelstange in die Aussparungen der zweiten Schenkel der Winkelprofile eingeführt werden, gelöst.

Die ersten Schenkel eines jeden Winkelprofils werden direkt an dem Fenster oder der Tür bzw. an dem Rahmenelement des Fensters oder der Tür befestig. Bevorzugt werden die ersten Schenkel dabei an dem Rahmenelement des Fensters oder der Tür angeschweißt. Dies schafft eine besonders feste Verbindung der Winkelprofile an dem Fenster oder der Tür. Der zweite Schenkel eines jeden Winkelprofils weist eine Aussparung zur Führung der Riegelstange auf. Die Riegelstange wird nach der Befestigung der Winkelelemente in die Aussparungen der zweiten Schenkel der wenigstens zwei Winkelprofile eingeführt. Die Riegelstange kann durch die Aussparungen eingeschoben werden. Nach dem Einführen der Riegelstange in die Aussparungen der Winkelprofile wird ein Ende der Riegelstange mit einem Schloss verbunden, so dass die Riegelstange nicht mehr aus den Aussparungen herausgleiten kann.

Besonders bevorzugt ist ein derartiges Verfahren, bei dem die Riegelstange wenigstens zwei Schlitze in ihrer Längsseite aufweist und mittels der Schlitze seitlich durch die in den zweiten Schenkeln der Winkelprofile vorgesehene Öffnungen hindurch in die Aussparungen der zweiten Schenkel eingeführt wird. Die Einführung der Riegelstange durch die seitlich in den zweiten Schenkeln der Winkelprofile vorgesehenen Öffnungen ermöglicht ein sehr einfaches Einführen der Riegelstange in die Aussparungen der Winkelprofile. Insbesondere dann, wenn eine axiale Einführung der Riegelstange in die Aussparungen aufgrund der Bauform des Fensters oder der Tür nicht möglich ist. Die Riegelstange wird in der Höhe der Schlitze durch die Öffnungen der zweiten Schenkel der Winkelprofile eingefädelt und anschließend axial in den Aussparungen verschoben und an dem Schloss des Fensters oder der Tür fixiert. Die Verschiebung und anschließende Fixierung der Riegelstange an dem Schloss gewährleistet, dass die Schlitze der Riegelstange nicht mehr in die Nähe der Öffnungen der zweiten Schenkel geraten können und somit die Riegelstange sicher entlang der Aussparungen verschoben werden kann.

Die Erfindung wird nun anhand von nicht ausschließlichen Ausführungsbeispielen, unter Bezugnahme auf die beiliegenden Zeichnungen, näher erläutert. Es zeigen:
- Figur 1: eine perspektivische Darstellung einer Riegelstangenanordnung einer Tür eines Schaltschrankes;
- Figur 2: eine perspektivische Darstellung des freien Endes einer Riegelstange während der Einführung in eine Riegelstangenführung;
- Figur 3: eine perspektivische Darstellung des freien Endes einer Riegelstange nach der Einführung in eine Riegelstangenführung;
- Figur 4: eine perspektivische Darstellung des nicht freien Endes einer Riegelstange, welches an einem Schloss fixiert wird;
- Figur 5: eine weitere perspektivische Darstellung des nicht freien Endes einer Riegelstange, welches an einem Schloss fixiert wird;
- Figur 6: eine Riegelstangenanordnung gemäß des Standes der Technik.

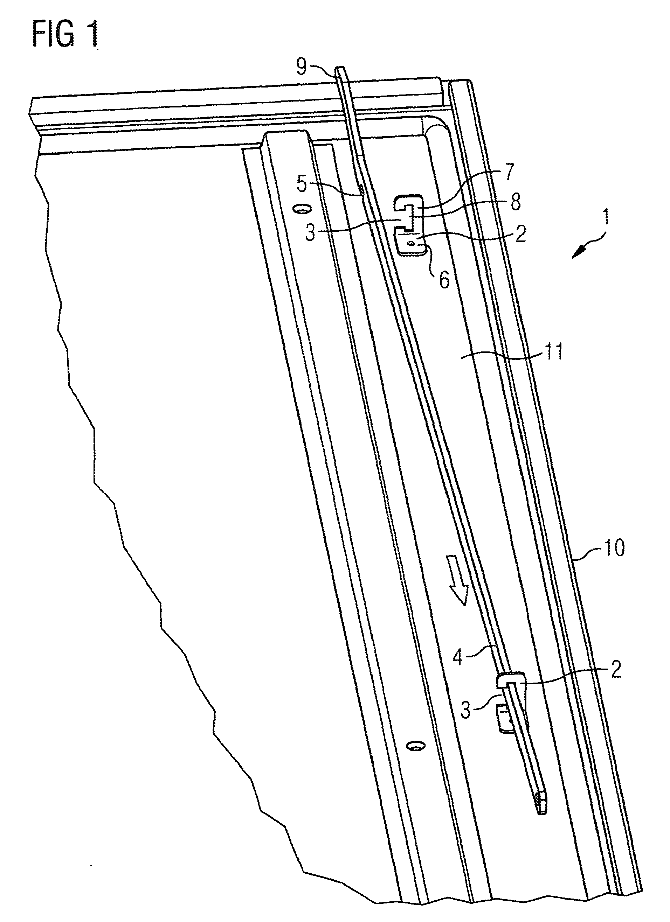

Fig. 1 zeigt eine perspektivische Darstellung einer Riegelstangenanordnung 1 für an eine Tür 10 eines Schaltschrankes. Die Riegelstangenanordnung 1 weist zwei Riegelstangenführungen 2 auf, welche als rechtwinkelige Winkelprofile ausgebildet sind. Diese Winkelprofile 2 sind direkt an einem Rahmenelement 11 der Tür angeschweißt. D.h., die Winkelprofile 2 weisen zwei Schenkel 6, 7 auf, wobei der erste Schenkel 6 an dem Rahmenelement 11 der Tür angeschweißt ist. Es ist denkbar, dass die Winkelprofile 2 kraftschlüssig, beispielsweise durch eine Schraubenverbindung, an dem Rahmenelement 11 befestigt werden. Eine Schweißverbindung lässt sich aber leicht herstellen und stellt eine sichere feste Verbindung dar. Die zweiten Schenkel 7 der als Winkelprofil 2 ausgebildeten Riegelstangenführungen weisen jeweils eine Aussparung 8, die zur Aufnahme der Riegelstange 4 dient, auf. Die Aussparungen zweier benachbarter Winkelprofile 2 sind fluchtend zueinander angeordnet, so dass die als gerades längliches Profil ausgebildete Riegelstange 4 in den Aussparungen 8 der zweiten Schenkel 7 der Winkelprofile 2 führbar gehalten werden kann. Die zweiten Schenkel 7 der Winkelprofile 2 weisen ferner seitliche jeweils eine Öffnung 3 auf, durch die die Riegelstange 4 in die Aussparungen 8 eingefädelt werden kann. Die Öffnungen 3 sind kleiner als die Aussparungen 8. Damit die Riegelstange 4 durch die Öffnungen 3 hindurchpasst, weist die Riegelstange 4 entsprechende Schlitze 5 auf. Der Abstand der Schlitze 5 zueinander entspricht dabei dem Abstand der Winkelprofile 2 an dem Rahmenelement 11 der Tür 10. Einfädeln der Riegelstange 4 in die Aussparungen 8 der Winkelprofile 2 wird die Riegelstange 4 axial verschoben, so dass die Schlitze 5 der Riegelstange 4 nicht mehr an den Öffnungen 3 der zweiten Schenkel 7 der Winkelprofile 2 liegen und die Riegelstange 4 nicht mehr aus den Aussparungen 8 entfernbar ist. Die Verschiebung der Riegelstange 4 wird durch den in Fig. 1 dargestellten Pfeil angedeutet. Die Riegelstange 4 wird an einem in dieser Figur nicht dargestellten Schloss fixiert, so dass die Positionen der Riegelstange 4 durch die Bewegung des Schlosses vorgegeben sind.

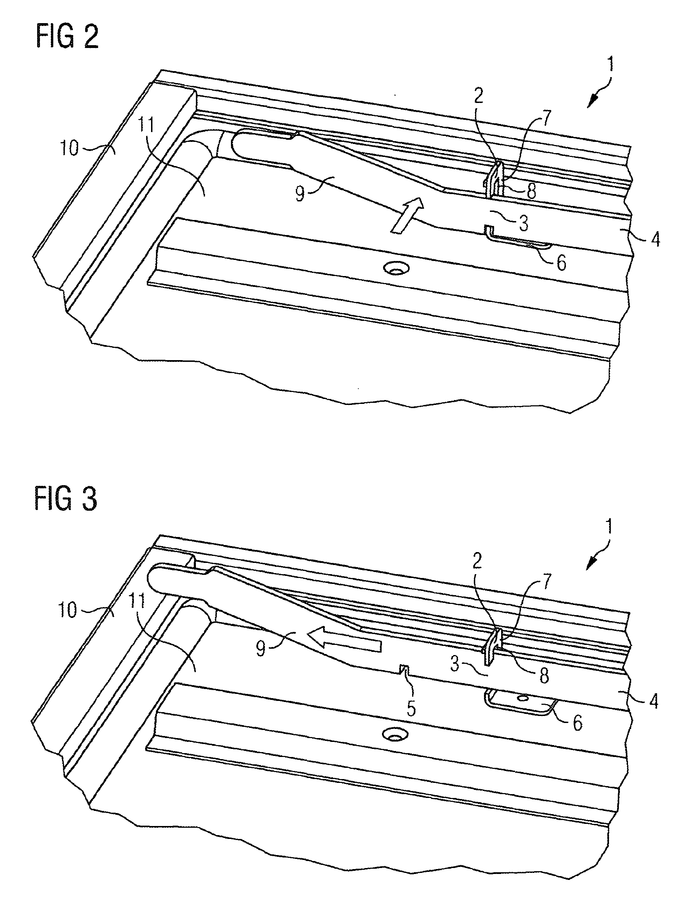

In der Fig. 2 ist eine perspektivische Darstellung des freien Endes 9 einer Riegelstange 4 während der Einführung in eine Riegelstangenführung 2 dargestellt. Die Riegelstange 4 wird mittels der Schlitze 5 durch die Öffnungen 3 der Winkelprofile 2 in die Aussparungen 8 eingeführt. Nach dem Einführen der Riegelstange 4 in die Aussparungen 8 kann die Riegelstange axial entlang der Aussparungen 8 verschoben werden, siehe Fig. 3. Das freie Ende 9 der Riegelstange 4 dient zum Hintergreifen einer Seitenwand des Schaltschrankes, um die Tür 10 des Schaltschrankes zu verschließen. Hierzu wird die Riegelstange 4 durch das nicht dargestellte Schloss entlang der Aussparungen 8 der zweiten Schenkel 7 der Winkelprofile 2 verschoben.

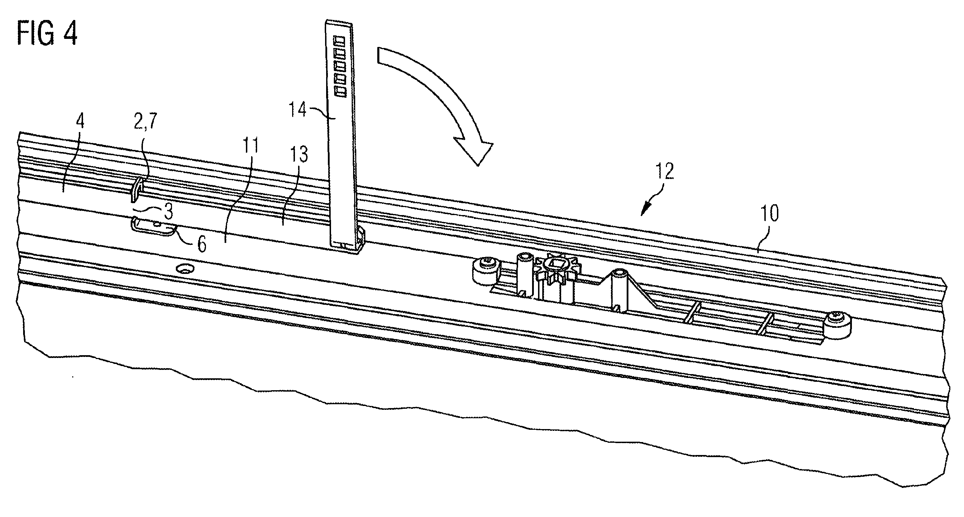

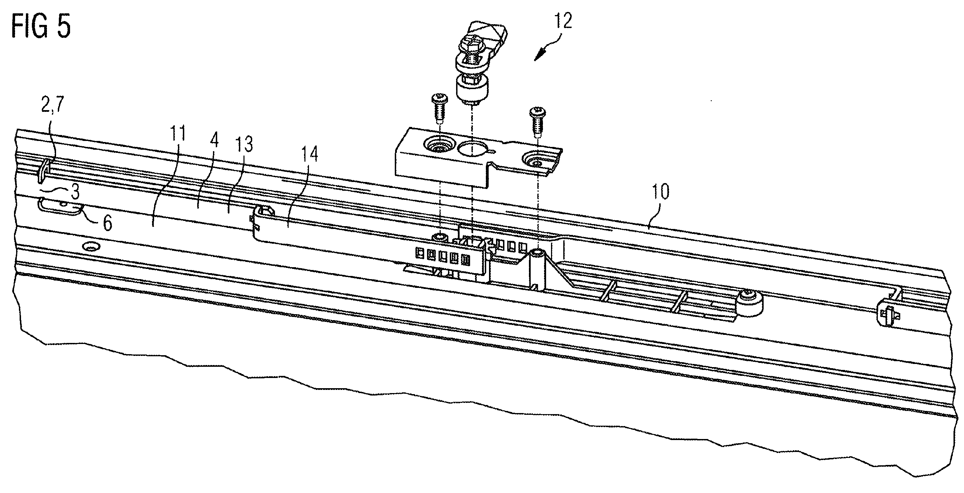

Fig. 4 zeigt eine perspektivische Darstellung des nicht freien Endes 13 einer Riegelstange 4 einer Riegelstangenanordnung 1, welches an einem Schloss 12 fixiert wird. Das nicht freie Ende 13 der Riegelstange 4 wird mittels einer Befestigungsstange 14 an dem Schloss 12 befestigt. Dabei kann das Schloss 12 die Befestigungsstange 14 und somit die Riegelstange 4 durch eine Schließbewegung entlang der Aussparungen 8 der Schenkel 7 der Winkelprofile 2 verschieben. Die Befestigungsstange 14 ist schwenkbeweglich an dem nicht freien Ende 13 der Riegelstange 4 befestigt. Die Winkelprofile 2 sind an ihren ersten Schenkeln 6 an dem Rahmenelement 11 der Tür 10 angeschweißt. Das Schloss 12 ist wie die Riegelstangenführungen 2 an dem Rahmenelement 11 der Tür 10 fixiert. Die Fixierung des Schlosses 12 an dem Rahmenelement 11 ist in der Fig. 5 dargestellt. Fig. 5 zeigt ferner, wie die Befestigungsstange 14 an dem Schloss 12 fixiert wird.

Figur 6 zeigt eine Riegelstangenanordnung gemäß dem Stand der Technik, siehe Beschreibungseinleitung.

Durch Riegelstangen 4 werden Türen 10 in einem Schaltschrank verschlossen. Die in den Fig. 1 bis 5 dargestellte Riegelstangenanordnung 1 dient der Montagevereinfachung.

### Bezugszeichenliste

- 1: Riegelstangenanordnung
- 2: Riegelstangenführung / Winkelprofil
- 3: Öffnung
- 4: Riegelstange
- 5: Schlitz in der Riegelstange
- 6: erster Schenkel des Winkelprofils
- 7: zweiter Schenkel des Winkelprofils
- 8: Aussparung im zweiten Schenkel des Winkelprofils
- 9: freies Ende der Riegelstange

- 10: Tür
- 11: Rahmenelement
- 12: Schloss
- 13: nicht freies Ende der Riegelstange
- 14: Befestigungsstange

- 20: Gewindebolzen
- 21: aufklappbares Kunststoffteil
- 22: Schraubenmutter

## Patentansprüche

1. Riegelstangenanordnung (1) für ein Fenster oder eine Tür (10) zum Verschließen des Fensters bzw. der Tür (10), aufweisend eine Riegelstange (4) und wenigstens zwei an einem Rahmenelement (11) des Fensters oder der Tür (10) befestigbare Riegelstangenführungen (2), die zum beweglichen Führen der Riegelstange (4) ausgebildet sind, dass die wenigstens zwei Riegelstangenführungen als Winkelprofile (2) ausgebildet sind, wobei ein erster Schenkel (6) eines jeden Winkelprofils (2) an dem Rahmenelement (11) des Fensters oder der Tür (10) befestigbar ist und der zweite Schenkel (7) eines jeden Winkelprofils (2) eine Aussparung (8) zur Aufnahme und Führung der Riegelstange (4) aufweist,
**dadurch gekennzeichnet, dass**
der zweite Schenkel (7) jedes Winkelprofils (2) seitlich eine Öffnung (3) zur Hindurchführung der Riegelstange (4) in die Aussparungen (8) aufweist und dass die Riegelstange (4) wenigstens zwei Schlitze (5) in ihrer Längsseite zur Hindurchführung der Riegelstange (4) durch die Öffnungen (3) in die zweiten Schenkel (7) der Winkelprofile (2) aufweist.

2. Riegelstangenanordnung (1) nach Anspruch 1, **dadurch gekennzeichnet, dass** die Schenkel (6, 7) eines jeden Winkelprofils (2) rechtwinkelig zueinander angeordnet sind.

3. Riegelstangenanordnung (1) nach einem der Ansprüche 1 oder 2, **dadurch gekennzeichnet, dass** die Riegelstange (4) ein rechteckiges Profil aufweist.

4. Riegelstangenanordnung nach einem der Ansprüche 1 bis 3, **dadurch gekennzeichnet, dass** die Riegelstangenführungen (2) aus einem schweißbaren Material ausgebildet sind.

5. Riegelstangenanordnung nach einem der Ansprüche 1 bis 4, **dadurch gekennzeichnet, dass** die Riegelstange (4) an einem Ende (9) zweifach abgewinkelt ist.

6. Fenster oder Tür (10), aufweisend wenigstens eine Riegelstangenanordnung (1), wobei die Riegelstangenanordnung (1) eine Riegelstange (4) und wenigstens zwei an einem Rahmenelement (11) des Fensters oder der Tür (10) befestigbare Riegelstangenführungen (2), die zum beweglichen Führen der Riegelstange (4) ausgebildet sind, aufweist, dass die wenigstens zwei Riegelstangenführungen als Winkelprofile (2) ausgebildet sind, wobei ein erster Schenkel (6) eines jeden Winkelprofils (2) an dem Rahmenelement (11) des Fensters oder der Tür (10) befestigbar ist und der zweite Schenkel (7) eines jeden Winkelprofils (2) eine Aussparung (8) zur Aufnahme und Führung der Riegelstange (4) aufweist,
**dadurch gekennzeichnet, dass**
der zweite Schenkel (7) jedes Winkelprofils (2) seitlich eine Öffnung (3) zur Hindurchführung der Riegelstange (4) in die Aussparungen (8) aufweist und dass die Riegelstange (4) wenigstens zwei Schlitze (5) in ihrer Längsseite zur Hindurchführung der Riegelstange (4) durch die Öffnungen (3) in die zweiten Schenkel (7) der Winkelprofile (2) aufweist.

7. Fenster oder Tür (10) nach Anspruch 6, **dadurch gekennzeichnet, dass** die wenigstens eine Riegelstangenanordnung (1) nach einem der Ansprüche 1 bis 5 ausgebildet ist.

8. Fenster oder Tür (10) nach Anspruch 6 oder 7, **dadurch gekennzeichnet, dass** der erste Schenkel (6) eines jeden Winkelprofils (2) an einem Rahmenelement (11) des Fensters bzw. der Tür (10) verschweißt ist, wobei die Aussparungen (8) der zweiten Schenkel (7) der Winkelprofile (2) fluchtend zueinander angeordnet sind.

9. Fenster oder Tür (10) nach einem der Ansprüche 6 bis 8, **dadurch gekennzeichnet, dass** die Riegelstange (4) in der in die Aussparungen (8) der zweiten Schenkel (7) der Winkelprofile (2) eingeführten Position in Wirkverbindungen zu einen Schloss (12) des Fensters oder der Tür (10) steht.

10. Fenster oder Tür (10) nach einem der Ansprüche 6 bis 9, **dadurch gekennzeichnet, dass** das Fenster bzw. die Tür (10) zum Verschließen eines Schaltschrankes ausgebildet ist.

11. Schaltschrank mit wenigstens einem Fenster oder wenigstens einer Tür (10), **dadurch gekennzeichnet, dass** das wenigstens eine Fenster oder die wenigstens eine Tür (10) gemäß einem der Patentansprüche 6 bis 10 ausgebildet ist.

12. Verfahren zum Befestigen einer Riegelstangenanordnung (1) an einem Rahmenelement (11) eines Fensters oder einer Tür (10), wobei die Riegelstangenanordnung (1) eine Riegelstange (4) und zwei Riegelstangenführungen (2) gemäß einem der Ansprüche 1 bis 5 umfasst, dass die ersten Schenkel (6) der als Winkelprofile ausgebildeten Riegelstangenführungen (2) an einem Rahmenelement (11) des Fensters oder der Tür (10) befestigt, insbesondere angeschweißt, werden und dass die Riegelstange (4) in die Aussparungen (8) der zweiten Schenkel (7) der Winkelprofile (2) eingeführt werden,
**dadurch gekennzeichnet, dass**
die Riegelstange (4) wenigstens zwei Schlitze (5) in ihrer Längsseite aufweist und mittels der Schlitze (5) seitlich durch die in den zweiten Schenkeln (7) der Winkelprofile (2) vorgesehenen Öffnungen (3) hindurch in die Aussparungen (8) der zweiten Schenkel (7) eingeführt wird.

## Claims

1. Lock bar assembly (1) for a window or door (10) for closing the window or door (10), having a lock bar (4) and at least two lock bar guides (2) which can be attached to a frame element (11) of the window or door (10) and which are designed for the movable guidance of the lock bar (4), the at least two lock bar guides being designed as angle profiles (2), it being possible to attach a first limb (6) of each angle profile (2) to the frame element (11) of the window or door (10) and the second limb (7) of each angle profile (2) having a recess (8) for accommodating and guiding the lock bar (4),
**characterised in that** the second limb (7) of each angle profile (2) has an opening (3) at the side to allow the lock bar (4) to be guided through into the recesses (8) and that the lock bar (4) has at least two slots (5) in its longitudinal side to allow the lock bar (4) to be guided through the openings (3) into the second limbs (7) of the angle profiles (2).

2. Lock bar assembly (1) according to claim 1, **characterised in that** the limbs (6, 7) of each angle profile (2) are disposed at right angles to one another.

3. Lock bar assembly (1) according to one of claims 1 or 2, **characterised in that** the lock bar (4) has a rectangular profile.

4. Lock bar assembly (1) according to one of claims 1 to 3, **characterised in that** the lock bar guides (2) are made of a weldable material.

5. Lock bar assembly (1) according to one of claims 1 to 4, **characterised in that** the lock bar (4) is bent twice at one end (9).

6. Window or door (10), having at least one lock bar assembly (1), the lock bar assembly (1) having a lock bar (4) and at least two lock bar guides (2) which can be attached to a frame element (11) of the window or door (10) and which are designed for the movable guidance of the lock bar (14), the at least two lock bar guides being designed as angle profiles (2), it being possible to attach a first limb (6) of each angle profile (2) to the frame element (11) of the window or door (10) and the second limb (7) of each angle profile (2) having a recess (8) for accommodating and guiding the lock bar (4), **characterised in that** the second limb (7) of each angle profile (2) has an opening (3) at the side to allow the lock bar (4) to be guided through into the recesses (8) and that the lock bar (4) has at least two slots (5) in its longitudinal side to allow the lock bar (4) to be guided through the openings (3) into the second limbs (7) of the angle profiles (2).

7. Window or door (10) according to claim 6, **characterised in that** the at least one lock bar assembly (1) is designed in accordance with one of claims 1 to 5.

8. Window or door (10) according to claim 6 or 7, **characterised in that** the first limb (6) of each angle profile (2) is welded to a frame element (11) of the window or door (10), the recesses (8) in the second limbs (7) of the angle profiles (2) being disposed flush with one another.

9. Window or door (10) according to one of claims 6 to 8, **characterised in that** the lock bar (4) in the position inserted into the recesses (8) of the second limbs (7) of the angle profiles (2) is in operative connection with a lock (12) of the window or door (10).

10. Window or door (10) according to one of claims 6 to 9, **characterised in that** the window or door (10) is designed to lock a switching cabinet.

11. Switching cabinet with at least one window or door (10), **characterised in that** the at least one window or door (10) is designed according to one of claims 6 to 10.

12. Method for attaching a lock bar assembly (1) to a frame element (11) of a window or door (10), the lock bar assembly (1) comprising a lock bar (4) and two lock bar guides (2) according to one of claims 1 to 5, the first limbs (6) of the lock bar guides (2) designed as angle profiles being attached to, in particular welded to, a frame element (11) of the window or door (10) and the lock bar (4) being inserted into the recesses (8) of the second limbs (7) of the angle profiles (2),
**characterised in that**
the lock bar (4) has at least two slots (5) in its longitudinal side and by means of the slots (5) is inserted laterally through the openings (3) provided in the second limbs (7) of the angle profiles (2) into the recesses (8) in the second limbs (7).

## Revendications

1. Agencement de tige de verrouillage (1) pour une fenêtre ou une porte (10) destiné à verrouiller la fenêtre ou la porte (10), comprenant une tige de verrouillage (4) et au moins deux guides (2) de tige de verrouillage susceptibles d'être fixés sur un élément de châssis (11) de la fenêtre ou de la porte (10) et conçus pour guider la tige de verrouillage (4) de manière mobile, lesdits au moins deux guides de tige de verrouillage étant conformés en profils équerres (2), une première branche (6) de chaque profil équerre (2) pouvant être fixée sur l'élément de châssis (11) de la fenêtre ou de la porte (10) et la seconde branche (7) de chaque profil équerre (2) présentant un creux (8) permettant de recevoir et de guider la tige de verrouillage (4),
**caractérisé en ce que**
la seconde branche (7) de chaque profil équerre (2) présente sur le côté une ouverture (3) permettant de faire passer la tige de verrouillage (4) dans les creux (8) et **en ce que** la tige de verrouillage (4) présente au moins deux encoches (5) pratiquées dans son côté longitudinal, permettant de faire passer la tige de verrouillage (4), à travers les ouvertures (3), dans les secondes branches (7) des profils équerres (2).

2. Agencement de tige de verrouillage (1) selon la revendication 1, **caractérisé en ce que** les branches (6, 7) de chaque profil équerre (2) sont disposées à angle droit l'une par rapport à l'autre.

3. Agencement de tige de verrouillage (1) selon l'une des revendications 1 ou 2, **caractérisé en ce que** la tige de verrouillage (4) présente un profil rectangulaire.

4. Agencement de tige de verrouillage selon l'une des revendications 1 à 3, **caractérisé en ce que** les guides (2) de tige de verrouillage sont réalisés en un matériau soudable.

5. Agencement de tige de verrouillage selon l'une des revendications 1 à 4, **caractérisé en ce que** la tige de verrouillage (4) est doublement coudée à une extrémité (9).

6. Fenêtre ou porte (10) présentant au moins un agencement de tige de verrouillage (1), ledit agencement de tige de verrouillage (1) comprenant une tige de verrouillage (4) et au moins deux guides (2) de tige de verrouillage susceptibles d'être fixés sur un élément de châssis (11) de la fenêtre ou de la porte (10) et conçus pour guider la tige de verrouillage de manière mobile, lesdits au moins deux guides de tige de verrouillage étant conformés en profils équerres (2), une première branche (6) de chaque profil équerre (2) pouvant être fixée sur l'élément de châssis (11) de la fenêtre ou de la porte (10) et la seconde branche (7) de chaque profil équerre (2) présentant un creux (8) permettant de recevoir et de guider la tige de verrouillage (4),
**caractérisée en ce que**
la seconde branche (7) de chaque profil équerre (2) présente sur le côté une ouverture (3) permettant de faire passer la tige de verrouillage (4) dans les creux (8) et **en ce que** la tige de verrouillage (4) présente au moins deux encoches (5) pratiquées dans son côté longitudinal, permettant de faire passer la tige de verrouillage (4), à travers les ouvertures (3), dans les secondes branches (7) des profils équerres (2).

7. Fenêtre ou porte (10) selon la revendication 6, **caractérisée en ce que** ledit au moins un agencement de tige de verrouillage (1) est conformé selon l'une des revendications 1 à 5.

8. Fenêtre ou porte (10) selon la revendication 6 ou 7, **caractérisée en ce que** la première branche (6) de chaque profil équerre (2) est soudée sur un élément de châssis (11) de la fenêtre ou de la porte (10), les creux (8) des secondes branches (7) des profils équerres (2) étant disposés en alignement l'un par rapport à l'autre.

9. Fenêtre ou porte (10) selon l'une des revendications 6 à 8, **caractérisée en ce que** la tige de verrouillage (4), lorsqu'elle est en position insérée dans les creux (8) des secondes branches (7) des profils équerres (2), est en liaison active avec une serrure (12) de la fenêtre ou de la porte (10).

10. Fenêtre ou porte (10) selon l'une des revendications 6 à 9, **caractérisée en ce que** la fenêtre ou la porte (10) est conçue pour fermer une armoire électrique.

11. Armoire électrique avec au moins une fenêtre ou au moins une porte (10), **caractérisée en ce que** ladite au moins une fenêtre ou ladite au moins une porte (10) est conformée selon l'une des revendications 6 à 10.

12. Procédé de fixation d'un agencement de tige de verrouillage (1) sur une fenêtre ou une porte (10), ledit agencement de tige de verrouillage (1) comprenant une tige de verrouillage (4) et deux guides (2) de tige de verrouillage selon l'une des revendications 1 à 5, les premières branches (6) des guides (2) de tige de verrouillage conformées en profils équerres étant fixées, en particulier soudées sur un élément de châssis (11) de la fenêtre ou de la porte (10) et la tige de verrouillage (4) étant insérée dans les creux (8) des secondes branches (7) des profils équerres (2),
**caractérisé en ce que**
la tige de verrouillage (4) présente au moins deux encoches (5) pratiquées dans son côté longitudinal et vient s'insérer au moyen desdites encoches (5), par le côté à travers les ouvertures (3) prévues dans les secondes branches (7) des profils équerres (2), dans les creux (8) des secondes branches (7).
